# EUROPÄISCHE PATENTSCHRIFT

(11) **EP 3 195 947 B1**
(45) Veröffentlichungstag und Bekanntmachung des Hinweises auf die Patenterteilung: **13.09.2023**
(21) Anmeldenummer: 17150394.9
(22) Anmeldetag: 05.01.2017
(51) Int. Cl.: B21C 23/14, B21D 53/88, B21C 35/02, B60R 19/34

(54) **VERFAHREN ZUR HERSTELLUNG EINES KRAFTFAHRZEUGBAUTEILS AUS EINEM EXTRUDIERTEN LEICHTMETALLPROFIL**
METHOD FOR MANUFACTURING A MOTOR VEHICLE PART MADE FROM AN EXTRUDED LIGHT METAL PROFILE
PROCÉDÉ DE PRODUCTION D'UN COMPOSANT DE VÉHICULE AUTOMOBILE À PARTIR D'UN PROFILÉ MÉTALLIQUE LÉGER EXTRUDÉ

(30) Priorität: 22.01.2016 DE 102016101159
(43) Veröffentlichungstag der Anmeldung: 26.07.2017
(73) Patentinhaber: Benteler Automobiltechnik GmbH, 33102 Paderborn (DE)
(72) Erfinder: Clausen, Edvin List, 6200 Løjt Kirkeby Åbenrå (DK); Hitz, Andreas, 59597 Erwitte (DE); Kåvik, Tobias Svantesson, 0854 Oslo (NO); Bastani, Amin Farjad, 2816 Gjøvik (NO)
(74) Vertreter: Griepenstroh, Jörg

(56) Entgegenhaltungen:
- WO-A1-97/27082
- WO-A1-2016/012009
- DE-B3-102013 008 635
- DE-C1- 3 730 117
- DE-T2- 69 413 458
- JP-A- H07 144 661
- JP-A- H08 174 047
- JP-A- 2002 282 981
- JP-A- 2003 145 215

## Beschreibung

Die vorliegende Erfindung betrifft ein Verfahren zur Herstellung eines Kraftfahrzeugbauteils aus einer Leichtmetalllegierung gemäß den Merkmalen im Patentanspruch 1.

Zur Herstellung von Kraftfahrzeugkarosserien werden Kraftfahrzeugstrukturbauteile sowie Karosseriebauteile verwendet. Diese sind zumeist aus Stahlblech gefertigt, so dass zum einen hinreichende Formgebungsfreiheitsgrade vorhanden sind, zum anderen eine hinreichende Festigkeit erreicht wird. Das Herstellungsverfahren sieht dabei zumeist vor, eine Blechplatine bereitzustellen, welche in ein Umformwerkzeug, insbesondere in ein Pressumformwerkzeug, eingelegt und dann pressumgeformt wird, so dass das Blechbauteil zu einem Kraftfahrzeugbauteil endgeformt wird.

Im Zuge der konsequenten Anforderung an den Leichtbau werden Kraftfahrzeugkarosseriebauteile und insbesondere auch Kraftfahrzeugstrukturbauteile mittels Warmumformen und Presshärten hergestellt, um das spezifische Bauteilgewicht bei Einsatz einer Stahllegierung bei mindestens gleichbleibender oder aber gesteigerter Festigkeit zu senken.

Alternativ werden Kraftfahrzeugbauteile aus Leichtmetall hergestellt, wobei hier insbesondere Aluminiumlegierungen zum Einsatz kommen. Auch hier werden walztechnisch erzeugte Blechplatinen aus Leichtmetall, insbesondere aus Aluminium bereitgestellt, die in ein Pressumformwerkzeug eingelegt werden und zu dem Kraftfahrzeugbauteil endgeformt werden.

Zur weiteren Verbesserung der Bauteileigenschaften in Bezug auf ein sinkendes Bauteilgewicht bei mindestens gleichbleibender oder aber erhöhter Steifigkeit werden Bauteile mit voneinander verschiedenen Wandstärken hergestellt. Die Bauteilbereiche, die eine hohe Steifigkeit und/oder Widerstandskraft im Fahrzeugcrashfall aufweisen sollen, haben dazu eine erhöhte Wandstärke, Bauteilbereiche, die geringer belastet sind, eine demgegenüber niedrigere Wandstärke. Um die Bauteile herzustellen, werden walztechnisch erzeugte Blechplatinen mit voneinander verschiedener Wandstärke bereitgestellt, welche als Tailored Material bekannt sind. Ein derartiges Tailored Blank Material wird entweder durch flexibles Walzen (Tailor Rolled Blank) hergestellt oder aber durch Aneinanderschweißen von Blechplatinen mit voneinander verschiedener Wandstärke (Tailor Welded Blank).

Die Herstellungskosten solcher Tailored Materialien sind vergleichsweise hoch, wobei die Breite der Übergangsbereiche der verschiedenen Wandstärken zueinander beispielsweise abhängig ist von dem Abwalzgrad oder aber dem thermischen Fügen im Falle eines geschweißten Tailored Bleches. Das Fügen sorgt zudem für Spannungen im Ausgangsmaterial und kann eine Schwachstelle am späteren Bauteil bedeuten.

Aus der JP 2003 145 215 A oder auch der JP 2002 282 981 A ist jeweils das Herstellen eines Kraftfahrzeugbauteils aus einem extrudierten Hohlprofil bekannt. Hierzu wird zunächst ein Profil mit dem Querschnitt mindestens einer geschlossenen Hohlkammer extrudiert. Im Anschluss wird dieses extrudierte Profil zu Profilstücken vereinzelt. Die hergestellten Profilstücke werden dann verbreitert. Aus den verbreiterten Profilstücken wird dann durch Umformen das Kraftfahrzeugbauteil hergestellt.

Aufgabe der vorliegenden Erfindung ist es, ein Verfahren zur Herstellung eines Kraftfahrzeugbauteils aufzuzeigen, mit dem es möglich ist ein gewichts- und belastungsoptimiertes Bauteil mit hoher Formgebungsmöglichkeit aus einer Leichtmetalllegierung kosteneffizient herzustellen.

Die zuvor genannte Aufgabe wird erfindungsgemäß mit einem Verfahren zur Herstellung eines Kraftfahrzeugbauteils aus einer Leichtmetalllegierung mit den Merkmalen im Patentanspruch 1 gelöst.

Vorteilhafte Ausgestaltungsvarianten des erfindungsgemäßen Verfahrens sind Gegenstand der abhängigen Patentansprüche. Diese sind in den abhängigen Patentansprüchen beschrieben.

Das Strangpressprofil wird mit einem gewellten oder mehrfach geschwungenen Querschnitt extrudiert. Die mindestens zwei geschlossenen Hohlkammern in dem Strangpressprofil werden mit extrudiert. Das extrudierte Strangpressprofil weist dabei eine Extrusionsbreite auf. Durch das Extrusionsverfahren ist es möglich, zielgerichtet und belastungsoptimiert voneinander verschiedene Wandstärken und/oder verschiedene Anordnung der mindestens zwei Hohlkammern im Querschnitt herzustellen. Eine Diagonale des Strangpressprofils kann dabei größer der Extrusionsbreite sein.

In einem weiteren Verfahrensschritt wird das Strangpressprofil im Querschnitt abgeflacht und/oder verbreitert. Hierdurch ergibt sich eine Verarbeitungsbreite die größer ist als die Extrusionsbreite. Bevorzugt ist die Verarbeitungsbreite mehr als 1,1, insbesondere mehr als 1,2, besonders bevorzugt 1,5-fach breiter gegenüber der Extrusionsbreite. Besonders bevorzugt ist die Verarbeitungsbreite mehr als 1,8-fach und insbesondere mehr als doppelt so breit gegenüber der Extrusionsbreite. Es ist im Rahmen der Erfindung auch möglich, dass die Verarbeitungsbreite deutlich größer als das 2-fache der Extrusionsbreite ist.

Auch die mindestens zwei Hohlkammern werden bevorzugt verbreitert und/oder abgeflacht. Bevorzugt ist die Verarbeitungsbreite mindestens 10% größer, bevorzugt mindestens 20%, insbesondere mindestens 30% größer der Extrusionsbreite. Dies bedeutet, die Verarbeitungsbreite weist eine Breite auf, die größer 1,1-mal, insbesondere größer 1,2-mal, bevorzugt größer 1,3-mal der Extrusionsbreite ist.

Nach dem Abflachen und/oder Verbreitern wird das Strangpressprofil zu Platinen vereinzelt. Die so hergestellten Platinen werden dann durch ein umformtechnisches Bearbeiten zu dem Kraftfahrzeugbauteil weiterverarbeitet. Dies kann beispielsweise durch ein Pressumformen erfolgen.

Eine besonders bevorzugte Ausgestaltungsvariante des erfindungsgemäßen Verfahrens sieht vor, dass die Hohlkammern nach dem Abflachen und/oder Verbreitern immer noch erhalten sind. Dies bedeutet, dass die mindestens zwei Hohlkammern selbst nicht abgeflacht oder abgeplattet wurden sondern noch im Querschnitt als Hohlkammer ausgebildet sind. Die Querschnittkonfiguration der Hohlkammern kann sich jedoch durch das Abflachen und/oder Verbreitern verändern.

Weiterhin besonders bevorzugt werden die mindestens zwei Hohlkammern in Extrusionsrichtung bzw. in Längsrichtung des Strangpressprofils beschnitten, so dass die Hohlkammern nur noch abschnittsweise in Extrusionsrichtung bzw. in Längsrichtung des Strangpressprofils ausgebildet sind.

Gemäß der Erfindung sind mindestens zwei Hohlkammern durch einen Steg miteinander verbunden ausgebildet. Dies bedeutet, dass zwischen zwei Hohlkammern keine geschlossene Hohlkammer sondern in diesem Sinne nur ein Steg ausgebildet ist.

In weiterer bevorzugter Ausgestaltungsvariante können zusätzlich mindestens zwei Hohlkammern nebeneinander ausgebildet sein. Dies bedeutet, dass diese unmittelbar benachbart nebeneinander liegen. Dies wird auch als Doppelhohlkammerprofil bezeichnet. Es können aber auch drei oder mehr Hohlkammern unmittelbar nebeneinanderliegend ausgebildet werden. Beispielsweise kann in einem Abschnitt des Querschnitts ein Doppelhohlkammerprofil ausgebildet sein und diesem benachbart eine weitere Hohlkammer ausgebildet sein, wobei das Doppelhohlkammerprofil und die eine Hohlkammer dann durch einen Steg verbunden sind. Aufgrund des Extrudierens ist der Querschnitt immer einstückig und werkstoffeinheitlich ausgebildet.

Besonders bevorzugt werden die mindestens zwei Hohlkammern während des Verbreiterns und/oder Abflachens in ihrer Höhe verringert und in der Breite vergrößert.

Weiterhin besonders bevorzugt ist vorgesehen, dass die abgeflachte und/oder verbreiterte Platine bzw. Extrusionsprofil in einem Winkel zwischen 0 und 90° insbesondere zwischen 5 und 85° zur Extrusionsrichtung beschnitten werden, besonders bevorzugt wird in einem Winkel zwischen 60° und 90°, besonders bevorzugt zwischen 65° und 85° zur Extrusionsrichtung beschnitten. Durch diese Maßnahme ist es ermöglicht, dass eine Bauteillänge des herzustellenden Kraftfahrzeugbauteils größer der Verarbeitungsbreite ist. Somit kann zum einen durch das Abflachen und/oder Verbreitern des Strangpressprofils und nochmals durch den zuvor beschriebenen schrägen in einem Winkel durchgeführten Beschnitt eine Bauteillänge erreicht werden, die insbesondere mehr als das 1,5-fache, besonders bevorzugt mehr als das 2-fache und insbesondere mehr als das 2,2-fache, besonders bevorzugt mehr als das 2,5-fache der Extrusionsbreite beträgt und bevorzugt auch größer der Verarbeitungsbreite ist, aufgrund eines schrägen Beschnitts.

Insgesamt können mit dem erfindungsgemäßen Verfahren Verarbeitungsbreiten von 150 bis 1200 mm realisiert werden. Die mögliche Bauteillänge kann durch schrägen Beschnitt nochmals größer der Verarbeitungsbreite und somit größer als die zuvor beschriebenen 1200 mm sein.

Besonders bevorzugt werden 5000er, 6000er oder 7000er Aluminiumlegierungen verarbeitet, wobei Dehngrenzen Rp 0,2 größer gleich 450 MPa erreicht werden können. Dazu kann wenigstens eine Wärmebehandlung vorgesehen werden, insbesondere ein Warmauslagern des Strangpressprofils oder bevorzugt des hergestellten Bauteils.

Besonders bevorzugt können Wandstärken von 1 bis 10 mm extrudiert werden. Insbesondere werden Wandstärken von 2 bis 5 mm extrudiert, wobei die Wandstärken im Querschnitt des Strangpressprofils voneinander abweichen. In einem Teil des Querschnitts können somit beispielsweise Wandstärken von 3 bis 5 mm hergestellt werden, wohingegen andere Wandstärken in einem Intervall von 1 bis 3 mm hergestellt werden können. Dies ist jedoch nicht für die Erfindung beschränkend. Es können viele voneinander verschiedene Wandstärken in einem Querschnitt hergestellt werden.

Die Umformung zur Durchführung des umformtechnischen Bearbeitens wird insbesondere in einem Folgeverbundwerkzeug durchgeführt, insbesondere in einem zweistufigen, dreistufigen, bevorzugt vierstufigen, besonders bevorzugt fünfstufigen und ganz besonders bevorzugt sechsstufigen Folgeverbundwerkzeug. Insbesondere bei der Herstellung von kleineren Bauteilen, werden in dem Folgeverbundwerkzeug mindestens zwei der nachfolgenden Prozessschritte ausgeführt:
- Dehnen und/oder Recken und/oder Strecken der Platine bzw. eines von einem Coil abgewickelten Strangpressprofils,
- Randbeschnitt der Platine bzw. des von dem Coil abgewickelten Strangpressprofils,
- Umformen zu dem Kraftfahrzeugbauteil,
- Lochstanzen,
- Lochformen,
- Vereinzeln.

Die Prozessschritte können dabei beliebig in ihrer Reihenfolge in dem Folgeverbundwerkzeug kombiniert werden.

Insbesondere kann somit durch das erfindungsgemäße Verfahren die Möglichkeit geschaffen werden, ein Bauteil auszubilden, welches im Querschnitt zumindest abschnittsweise über seine Längserstreckung mindestens zwei Hohlkammern aufweist. Das Bauteil kann im Gegensatz zu aus dem Stand der Technik bekannten Bauteilen aus Extrusionsprofilen dabei jedoch aufgrund des erfindungsgemäßen Schrittes des Abflachens und/oder Verbreiterns eine bezogen auf die Bauteillänge relativ hohe Bauteilbreite erreichen. Die Bauteillänge selbst kann sowohl in Extrusionsrichtung hergestellt werden jedoch auch im Wesentlichen quer zur Extrusionsrichtung orientiert sein.

Weitere Vorteile, Merkmale, Eigenschaften und Aspekte der vorliegenden Erfindung werden in der nachfolgenden Beschreibung erläutert. Bevorzugte Ausgestaltungsvarianten werden in den schematischen Figuren dargestellt. Diese dienen dem einfachen Verständnis der Erfindung. Es zeigen:
- Figur 1a und b: ein im Zuge eines nicht beanspruchten Verfahrens extrudiertes Strangpressprofil nach dem Extrudieren und nach dem Verbreitern,
- Figur 2a und b: ein im Zuge des erfindungsgemäßen Verfahrens extrudiertes Strangpressprofil nach dem Extrudieren und nach dem Verbreitern,
- Figur 3: eine mit dem erfindungsgemäßen Verfahren hergestellte Bodenplatte eines Kraftfahrzeuges,
- Figur 4a bis c: ein nicht beanspruchtes Herstellverfahren in den einzelnen Prozessschritten,
- Figur 5a bis d: ein mit dem in Figur 4a bis c dargestellten Verfahren hergestellter Türaufprallträger,
- Figur 6: einen nicht beanspruchten Verfahrensablauf zur Herstellung eines Kraftfahrzeugbauteils in Form einer Domstrebe,
- Figur 7a bis c: einen nicht beanspruchten Verfahrensablauf zur Herstellung einer in Längsrichtung nur abschnittsweise ausgebildeten Hohlkammer,
- Figur 8: eine Kraftfahrzeugsäule,
- Figur 9: eine Längsträgerunterschale,
- Figur 10: ein Schließblech eines Längsträgers,
- Figur 11: eine Hutablage,
- Figur 12: einen Getriebetunnel,
- Figur 13: ein hinteres Bodenblech,
- Figur 14: ein vorderes Bodenblech,
- Figur 15: einen Sitzquerträger,
- Figur 16: einen alternativen Sitzquerträger,
- Figur 17a bis f: einen Längsträger,
- Figur 18a bis f: einen Querträger und
- Figur 19a bis d: einen Dachholm.

In den Figuren werden für gleiche oder ähnliche Bauteile dieselben Bezugszeichen verwendet, auch wenn eine wiederholte Beschreibung aus Vereinfachungsgründen entfällt.

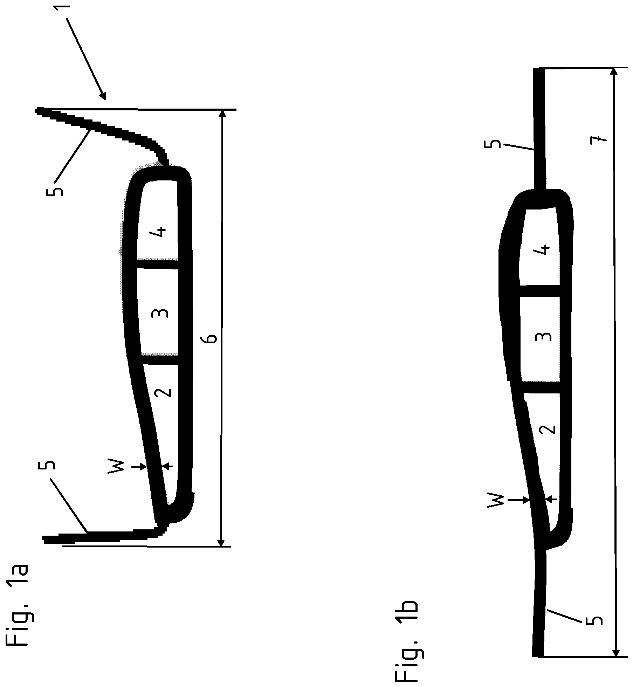

Figur 1a zeigt ein im Zuge eines nicht beanspruchten Verfahrens hergestelltes extrudiertes Strangpressprofil 1. Das Strangpressprofil 1 weist insgesamt drei Hohlkammern 2, 3, 4 auf sowie zwei seitlich von den äußeren Hohlkammern 2, 4 abstehende Flansche 5. Insgesamt weist das Strangpressprofil 1 eine Extrusionsbreite 6 auf, sowie im Querschnitt voneinander verschiedene Wandstärken W, wobei die Wandstärkendicke aufgrund des Extrusionsvorganges beliebig gewählt werden kann. In einem nächsten Verarbeitungsschritt gemäß Figur 1b wird das Strangpressprofil 1 abgeflacht, so dass hier dargestellt die seitlichen Flansche 5 im Wesentlichen abgebogen werden. Hiernach weist das abgeflachte bzw. verbreiterte Strangpressprofil 1 eine Verarbeitungsbreite 7 auf, die größer ist als die Extrusionsbreite 6. Danach kann eine weitere umformtechnische Verarbeitung stattfinden. Auch können beim Abflachen die Hohlkammern 2, 3, 4 abgeflacht werden, was jedoch nicht gezeigt ist.

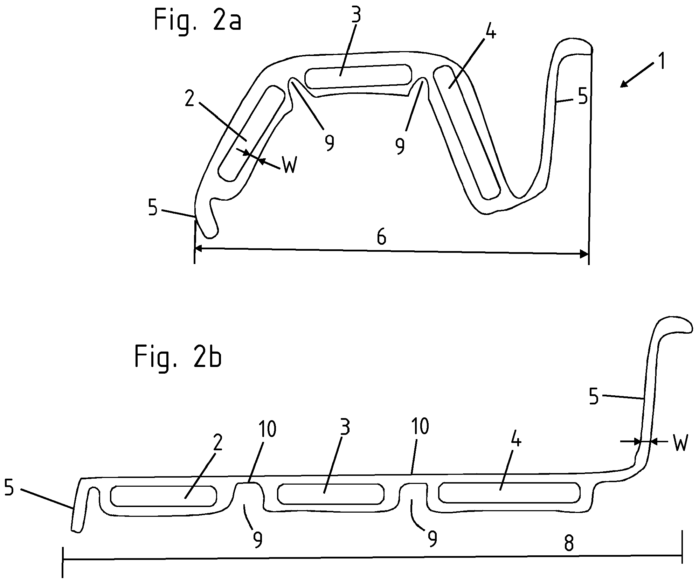

Figur 2 zeigt Prozessschritte eines erfindungsgemäßen Verfahrens. Zunächst wird gemäß Figur 2a ein Extrusionsprofil 1 hergestellt, welches insgesamt einen gewellten Querschnitt aufweist. Dieses Extrusionsprofil besitzt wiederum drei direkt benachbarte Hohlkammern 2, 3, 4 sowie seitlich davon abstehende Flansche 5. Die Wandstärke W ist so gewählt, dass im Folgenden der Pressformschritt begünstigt wird.

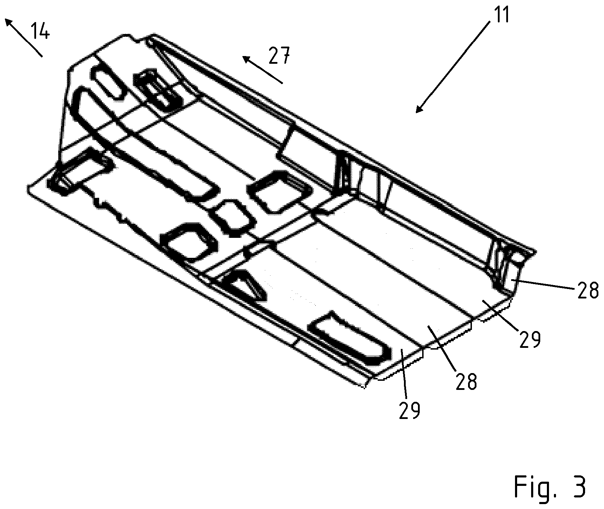

Figur 2b zeigt das Extrusionsprofil zwischen den Hohlkammern 2, 3, 4 nach dem Verbreitern bzw. Abflachen sowie in diesem Fall einen weiteren Pressumformschritt. Hierzu weist das Extrusionsprofil eine Bauteilbreite 8 auf, die ebenfalls größer ist als die Extrusionsbreite 6. Der auf die Bildebene bezogene rechte Flansch 5 sowie der auf die Bildebene bezogene linke Flansch 5 sind jeweils gegenüber den mittig liegenden Hohlkammern 2, 3, 4 durch das Pressumformen in einem Winkel abstehend verändert. Es sind Nuten 9 zwischen den Hohlräumen ausgebildet, die das Verbreitern begünstigen. Die Hohlkammern 2, 3, 4 sind durch Stege 10 miteinander verbunden. Beispielsweise ist es insbesondere möglich eine in Figur 3 gezeigte Bodenplatte 11 gemäß der Ausführungsvariante von Figur 2a und b herzustellen.

Die Längsrichtung 27 ist dabei in Extrusionsrichtung 14 der Platine orientiert. Folglich ergeben sich in Längsrichtung 27 entstehende Dickbereiche 28 und dazwischen angeordnete Dünnbereiche 29.

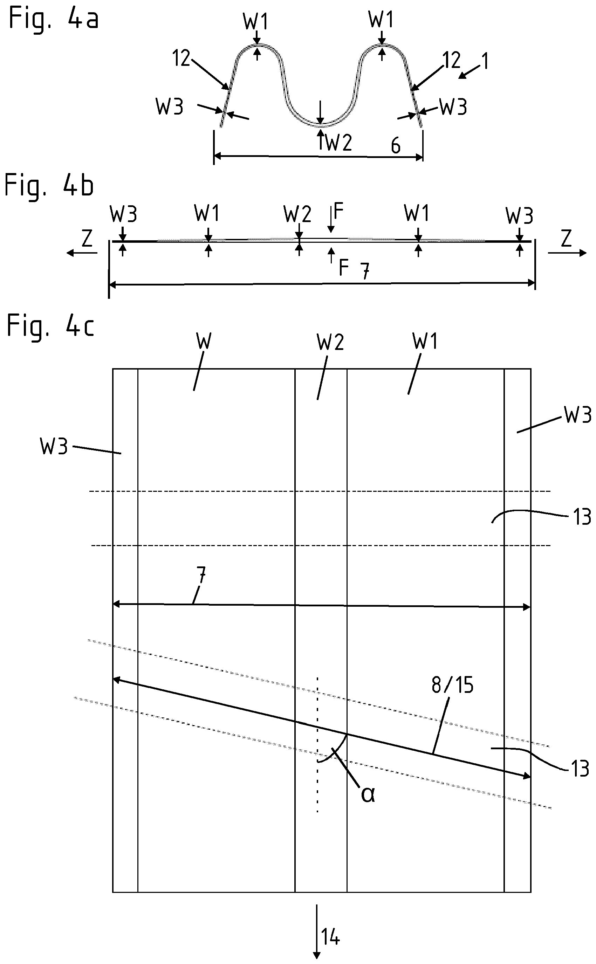

Figur 4a bis c zeigen ein nicht beanspruchtes Verfahren vom Herstellen eines Strangpressprofils 1 über Abflachen bzw. Verbreitern bis zum Vereinzeln und/oder Beschnitt der damit hergestellten Platinen 13. Gemäß Figur 4a wird ein Strangpressprofil 1 mit einem wellenförmigen Querschnitt hergestellt. Dabei ist eine mittig angeordnete Wandstärke W2 größer als eine außenliegende Wandstärke W3 sowie dazwischen von der Wandstärke W2 zu der Wandstärke W3 sich verringernder Übergang mit der variierenden Wandstärke W1. Ein Dickenübergang von Wandstärke W1 zu Wandstärke W3 in Form eines Dickensprunges 12 ist somit problemlos aufgrund des Extrudierens herstellbar. Dieses Strangpressprofil 1 weist wiederum eine Extrusionsbreite 6 auf. Im Bereich des Dickensprunges 12 kann somit ein in Querrichtung sehr schmaler Übergangsbereich geschaffen werden im Gegensatz zu einem Walzprozess.

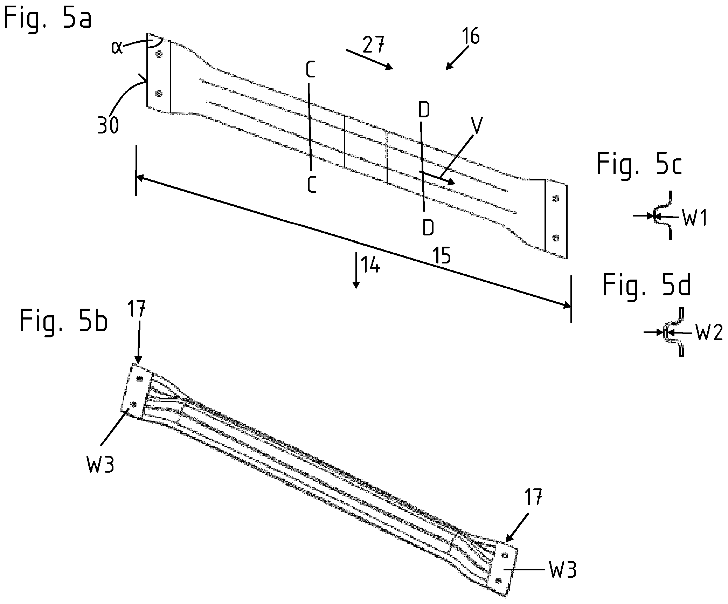

Dem Extrudieren nachgeschaltet ist ein Abflachen bzw. Verbreitern, dargestellt in Figur 4b. Das Abflachen bzw. Verbreitern kann im Rahmen der Erfindung mittels eines Pressumformwerkzeuges durchgeführt werden, so dass aufgrund einer von oben und/oder unten auf das Bauteil wirkenden Pressenkraft F dieses verbreitert werden kann, jedoch ergänzend oder alternativ mittels einer Zugumformung, so dass aufgrund einer am Ende ansetzenden Zugkraft Z das Bauteil verbreitert wird. Im Ergebnis werden durch Vereinzeln des Strangpressprofils 1 Platinen 13 hergestellt mit einer Verarbeitungsbreite 7, größer der Extrusionsbreite 6. Diese Platinen 13 können dann zunächst bevorratet werden und/oder weiterverarbeitet werden, insbesondere aufgrund eines Platinenzuschnitts. Bevorzugt wird die Platine 13 in einem Winkel α zur Extrusionsrichtung 14 beschnitten, so dass damit eine Bauteilbreite 8 oder Bauteillänge 15 erreicht werden kann, die größer der Verarbeitungsbreite ist. Der Winkel α beträgt dazu besonders bevorzugt zwischen 70° und 90° bezogen auf die Extrusionsrichtung 14. Es ist jedoch auch möglich ein Bauteilbeschnitt herzustellen, der quer zur Extrusionsrichtung 14 ausgebildet ist. In diesem Falle entspricht die Bauteillänge im Wesentlichen der Verarbeitungsbreite 7. Beispielsweise kann mit dem in Figur 4 dargestellten Verfahrensablauf ein in Figur 5a bis d hergestellter Türaufprallträger 16 ausgebildet werden. Anstelle des Vereinzelns durch Platinenzuschnitt vor dem Umformen kann auch vorgesehen werden, erst in einem der letzten Schritte die Bauteile zu vereinzeln.

Figur 5a zeigt eine Draufsicht, Figur 5b eine Perspektivansicht und die Figuren 5c und 5d eine Querschnittsansicht gemäß der Schnittlinie C-C und D-D aus Figur 5a. Der Türaufprallträger 16 kann dabei jeweils einen äußeren Anbindungsbereich 17 sowie einen sich dazwischen erstreckenden Bauteilbereich aufweisen. Dabei finden sich die Wandstärken W2, W3 und der Übergang W1 in dem Bauteil wieder. Die Bauteillänge 15 ist dabei aufgrund eines zur Extrusionsrichtung 14 in einem Winkel durchgeführten schrägen Beschnittes hergestellt worden und daher größer als die Verarbeitungsbreite 7 gemäß Figur 4. Gemäß Figur 5b ist gut ersichtlich, dass nach dem Platinenbeschnitt nochmals eine dreidimensionale Verformung, beispielsweise durch ein Pressumformen hergestellt wird. Die äußeren Kanten 20 sind bevorzugt schräg orientiert in Bezug auf eine Längsrichtung 27, aufgrund eines schrägen Beschnitts. Dies zeigt der Winkel α.

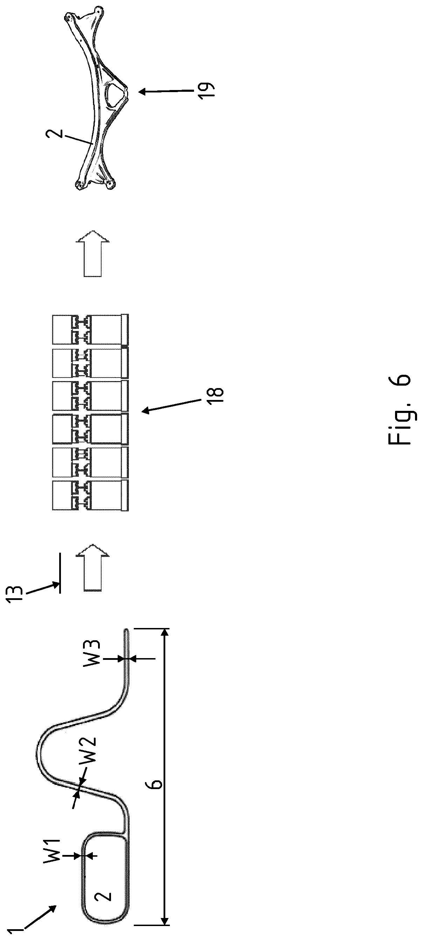

Figur 6 zeigt einen nicht beanspruchten Verfahrensablauf. Zunächst wird ein Strangpressprofil 1 hergestellt mit einer Hohlkammer 2 sowie voneinander verschiedenen Wandstärken W1, W2, W3 und einer Extrusionsbreite 6. Die Wandstärke W1 ist kleiner als die Wandstärke W2 und auch kleiner als die Wandstärke W3. Die Wandstärke W3 ist kleiner als die Wandstärke W2. Das so hergestellte Strangpressprofil 1 kann dann bevorzugt nach dem Strangpressen zu einzelnen Platinen 13 vereinzelt werden, wobei die Platinen 13 dann einem Folgeverbundwerkzeug 18 zugeführt werden, hier dargestellt als sechsstufiges Folgeverbundwerkzeug 18. In dem Folgeverbundwerkzeug 18 können dann die Platinen 13, sofern noch nicht geschehen, verbreitert und/oder abgeflacht werden und durch verschiedene Beschnitt- und Umform- sowie Reckoperationen zu dem Kraftfahrzeugbauteil 19 hergestellt werden. Dies ist beispielsweise als Domstrebe ausgebildet und weist in Längsrichtung vollständig die zuvor beschriebene Hohlkammer 2 auf. Anstelle des Folgeverbundwerkzeuges 18 kann auch eine Transferpresse verwendet werden.

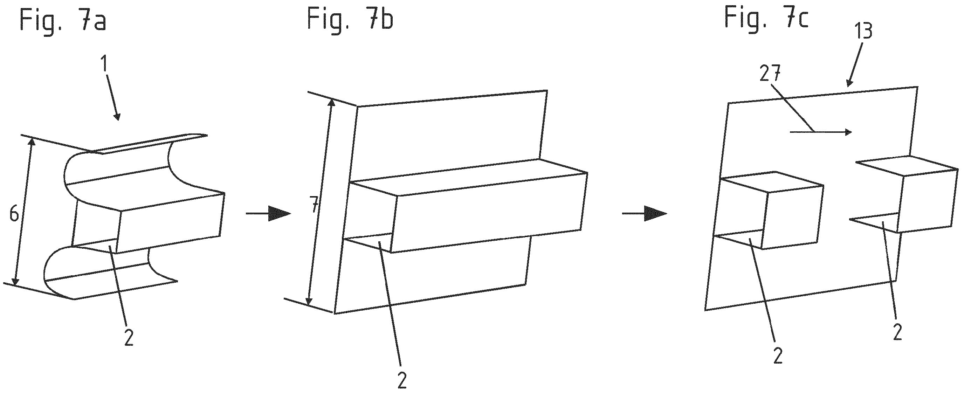

Figur 7 zeigt ein nicht beanspruchtes Strangpressprofil 1 mit einem unebenen Querschnitt und einer Hohlkammer 2. Dieses wird von einer Extrusionsbreite 6 gemäß Figur 7a auf eine in Figur 7b dargestellte Verarbeitungsbreite 7 abgeflacht und in einem weiteren Verarbeitungsschritt gemäß Figur 7c wird die Hohlkammer 2 in Längsrichtung der damit hergestellten Platine 13 längenabschnittsweise in Längsrichtung 27 schneidetechnisch bearbeitet, so dass die Hohlkammer 2 nur abschnittsweise in Längsrichtung der Platine 13 ausgebildet ist. In diesem Beispiel ist die gleiche Hohlkammer 2 im Querschnitt unverändert aber teilweise auch entfernt über Längenabschnitte ausgebildet.

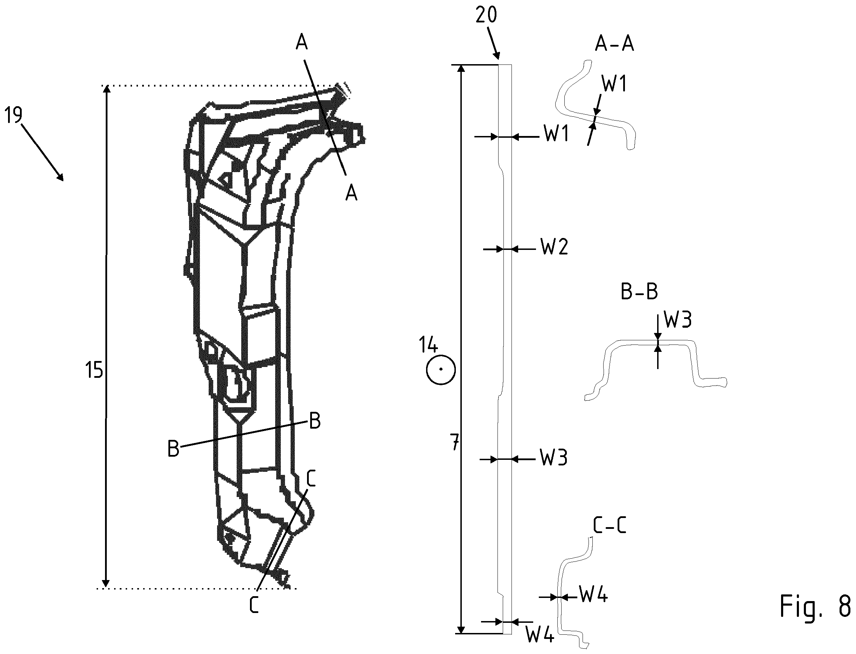

Figur 8 zeigt ein nicht beanspruchtes Kraftfahrzeugbauteil 19 in Form einer Kraftfahrzeugsäule und hier insbesondere einer A-Säule. Gemäß den Querschnittsansichten A-A, B-B und C-C ist jeweils eine im Querschnitt homogene Wandstärke vorgesehen, wobei ein Längsschnitt 20 zeigt, dass voneinander verschiedene Wandstärken W1, W2, W3, W4 in Längsrichtung hergestellt sind. Diese voneinander verschiedenen Wandstärken W1, W2, W3, W4 können so hergestellt werden, dass auf die Bildebene bezogen auf den Längsschnitt 20 die Extrusionsrichtung 14 eingezeichnet ist. Die dabei erzielbare Verarbeitungsbreite ist aufgrund des nachgeschalteten dreidimensionalen Pressumformens etwas größer ist als die Bauteillänge 15, mit der das Bauteil hergestellt werden kann.

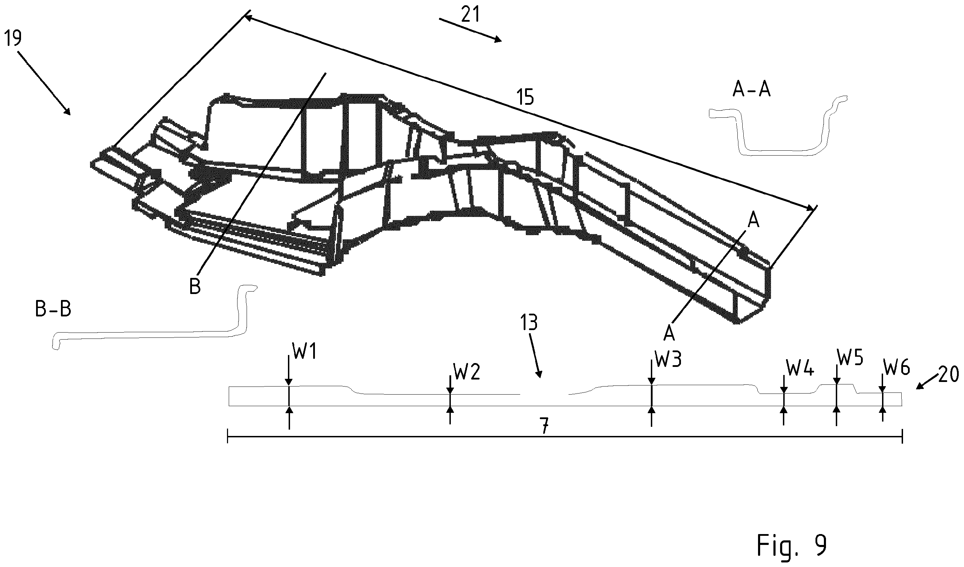

Figur 9 zeigt ein weiteres nicht beanspruchtes Kraftfahrzeugbauteil 19 am Beispiel eines Längsträgers und insbesondere hier einer Längsträgerunterschale oder Innenverstärkung. Auch hier sind wiederum zwei Querschnitte dargestellt gemäß der Schnittlinie A-A und B-B. Die zunächst zu verarbeitende Platine 13 weist eine Verarbeitungsbreite 7 auf sowie im Querschnitt voneinander verschiedene Wandstärken W1, W2, W3, W4, W5, W6. Das Bauteil wird ausgehend von der dargestellten Platine 13 derart umformtechnisch bearbeitet, dass sich die Bauteillängsrichtung 21 in Richtung der Verarbeitungsbreite 7 erstreckt. Zudem entspricht die Verarbeitungsbreite 7 im Wesentlichen der Bauteillänge 15. Eine Längenänderung, beispielsweise aufgrund dreidimensionaler pressformtechnischer Bearbeitung ist dabei berücksichtigt.

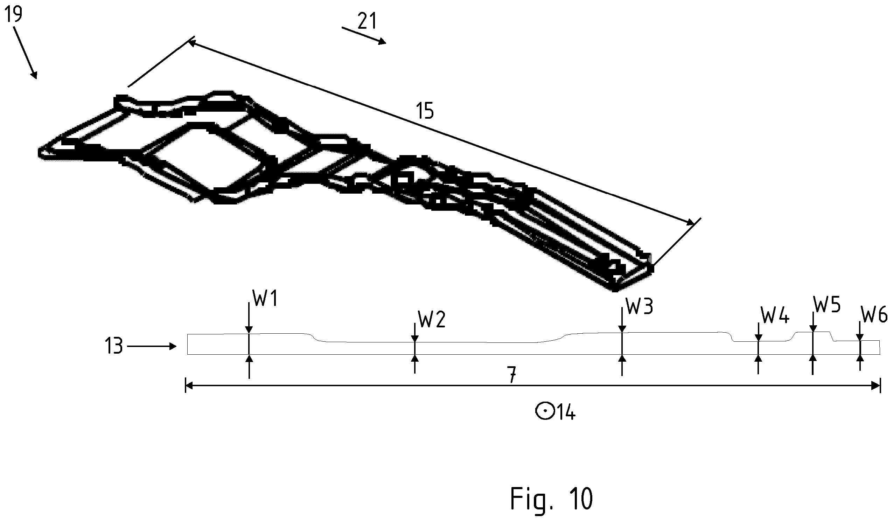

Figur 10 zeigt ein weiteres nicht beanspruchtes Kraftfahrzeugbauteil 19 für einen Längsträger, beispielsweise eine Oberschale oder aber ein Schließblech. Auch hier ist gut zu erkennen, dass das Bauteil dreidimensional pressformtechnisch bearbeitet ist, wobei auch hier wiederum sich die Bauteillängsrichtung 21 quer zur Extrusionsrichtung 14 erstreckt und somit die Bauteillänge 15 im Wesentlichen der Verarbeitungsbreite 7 der Platine 13 entspricht. Auch hier weist die Platine 13 wiederum voneinander verschiedene Wandstärken W1, W2, W3, W4, W5, W6 im Querschnitt auf.

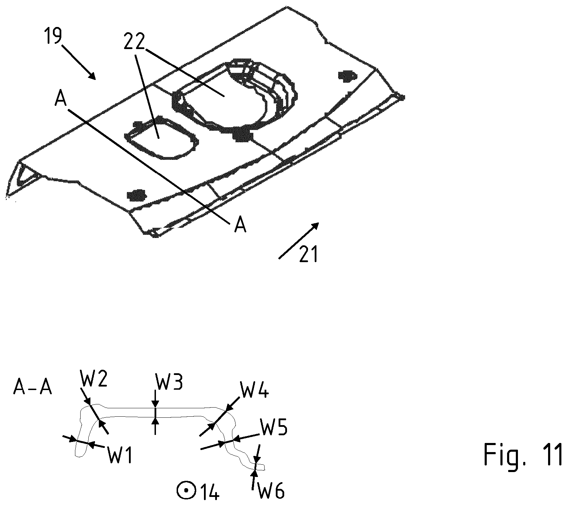

Figur 11 zeigt ein Kraftfahrzeugbauteil 19 in Form einer Hutablage gemäß Schnittansicht mit voneinander verschiedenen Wandstärken W1, W2, W3, W4, W5, W6. Die Bauteillängsrichtung 21 ist dabei selbst in Extrusionsrichtung 14 orientiert. Das Bauteil selbst weist Ausnehmungen 22, die durch schneidetechnisches Bearbeiten hergestellt werden können, auf.

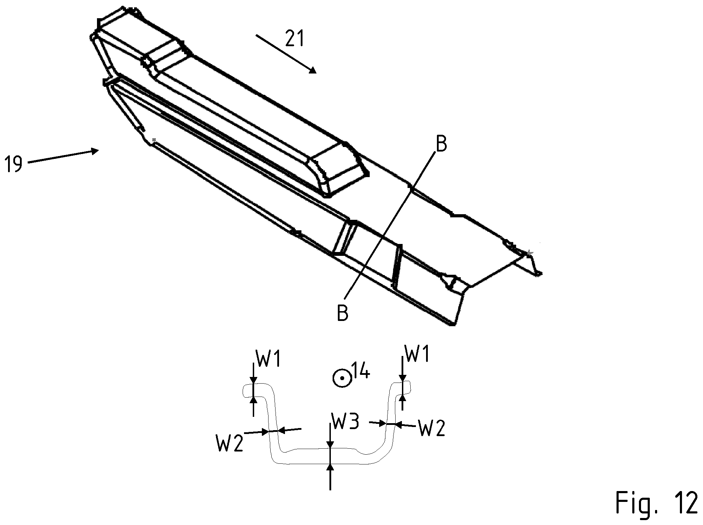

Figur 12 zeigt ein Kraftfahrzeugbauteil 19 in Form eines Tunnels, insbesondere Getriebetunnels. Gemäß der Schnittansicht B-B sind im Querschnitt voneinander verschiedene Wandstärken W1, W2, W3 realisiert. Die Bauteillängsrichtung 21 entspricht dabei der Extrusionsrichtung 14.

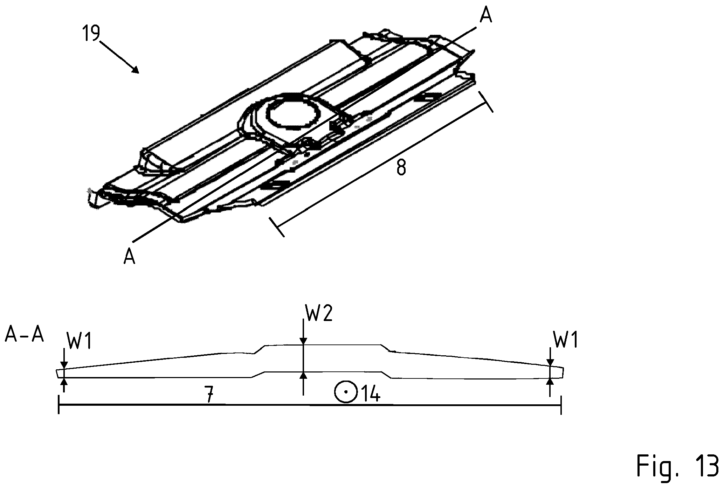

Figur 13 zeigt ein Kraftfahrzeugbauteil 19 in Form eines hinteren Bodenbleches. Gemäß der Längsschnittansicht A-A weist das Bauteil voneinander verschiedene Wandstäken W1, W2 auf. Die Bauteilbreite 8 entspricht dabei im Wesentlichen der Verarbeitungsbreite 7 einer Platine.

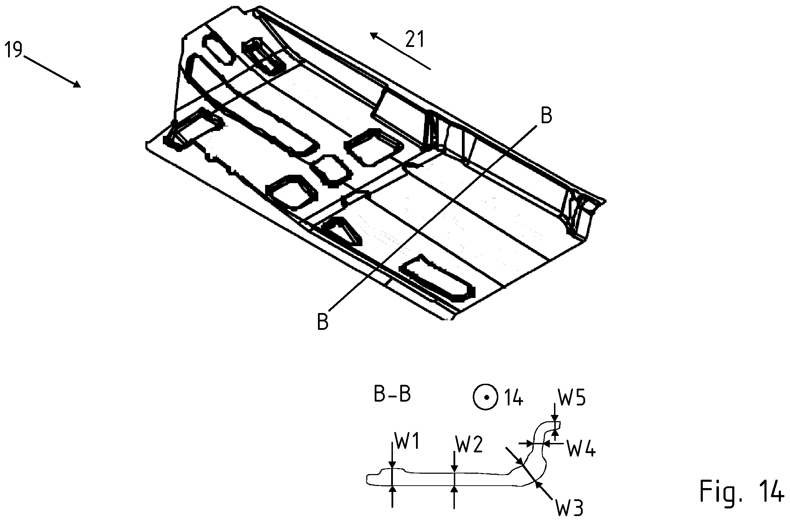

Figur 14 zeigt ein Kraftfahrzeugbauteil 19 in Form eines vorderen Bodenbleches. In seiner Bauteillängsrichtung 21 ist das Bodenblech wiederum in Extrusionsrichtung 14 ausgebildet, wobei der Querschnitt gemäß Schnittlinie B-B voneinander verschiedene Wandstärken W1, W2, W3, W4, W5 aufweist.

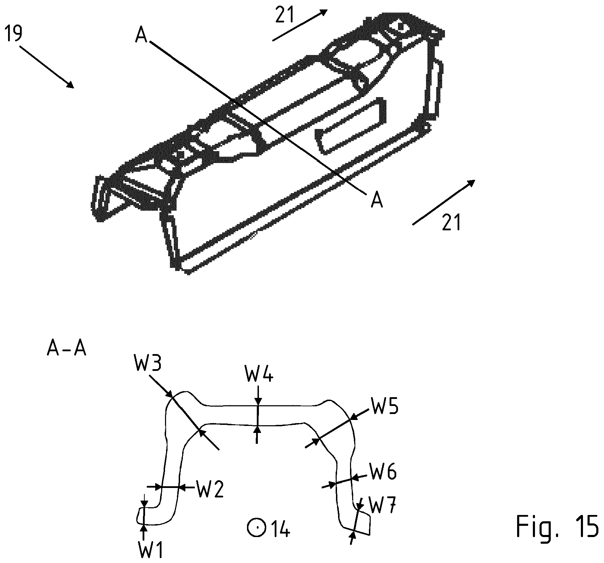

Figur 15 zeigt ein Kraftfahrzeugbauteil 19 in Form eines Sitzquerträgeres, an welchem ein nicht näher dargestellter Fahrzeugsitz bzw. Sitzschienen befestigt werden. Der Sitzquerträger ist dabei mit seiner Bauteillängsrichtung 21 auch in Extrusionsrichtung 14 ausgebildet. Der Querschnitt weist folglich voneinander verschiedene Wandstärken W1, W2, W3, W4, W5, W6 auf.

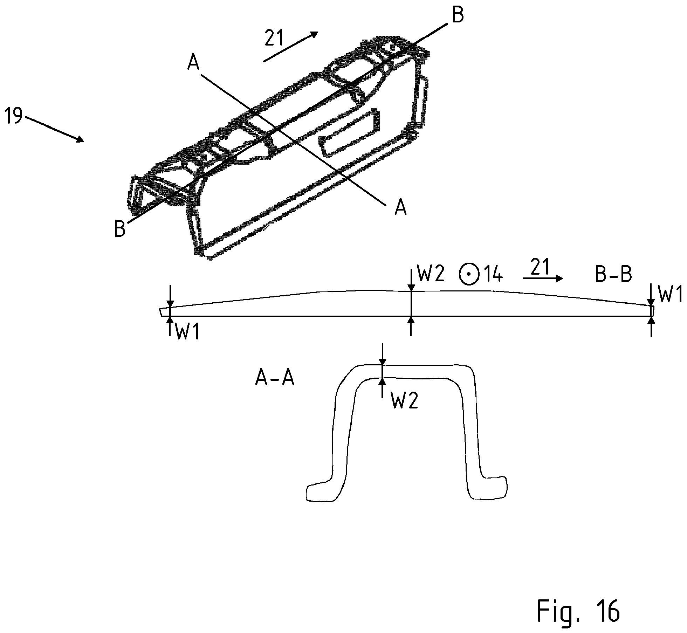

Figur 16 zeigt ebenfalls ein Kraftfahrzeugbauteil 19 in Form eines Sitzquerträgers. In diesem Fall ist jedoch die Bauteillängsrichtung 21 quer zur Extrusionsrichtung 14 ausgebildet. Gemäß Schnittdarstellung ist die Wandstärke W1, W2 im Längsschnitt voneinander verschieden, wobei die dabei jeweils sich ergebende Wanddicke eines Querschnittes einen homogenen Verlauf aufweist, bzw. gemäß Schnittlinie A-A.

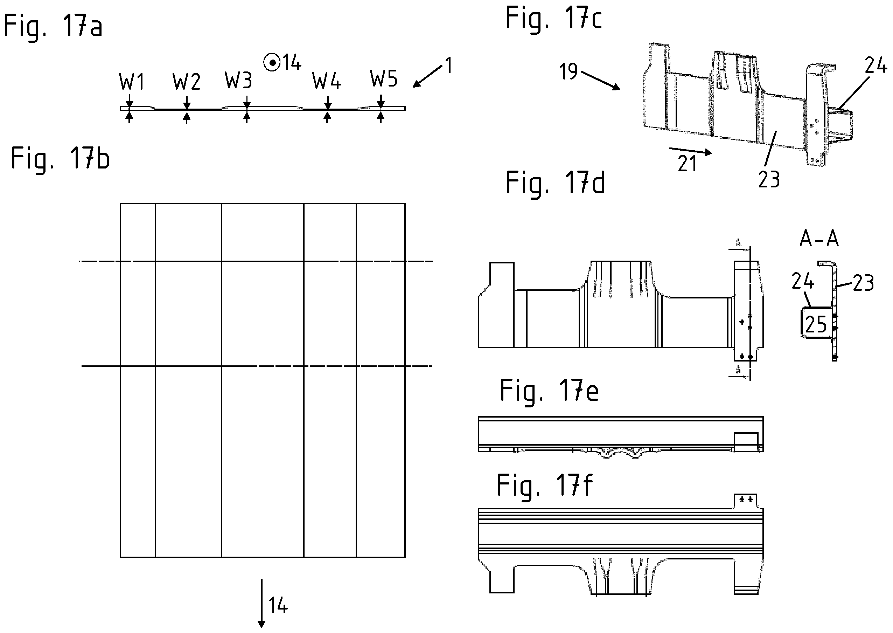

Figur 17 zeigt ein Kraftfahrzeugbauteil 19 in Form eines Längsträgers. Dieser Längsträger weist ein Basisbauteil 23 sowie ein mit dem Basisbauteil 23 gekoppeltes Hohlprofilbauteil 24, abschnittsweise in Bauteillängsrichtung 21 auf. Gemäß Figur 17a und b wird das Basisbauteil 23 zunächst aus einem extrudierten abgeflachten Strangpressprofil 1 mit voneinander verschiedenen Wandstärken W1, W2, W3, W4, W5 hergestellt. Anschließend wird dieses, wie in den Figuren 17c, 17d, 17e und 17f ersichtlich, schneidetechnisch und umformtechnisch bearbeitet, so dass das Basisbauteil 23 hergestellt wird sowie mit dem Hohlprofilbauteil 24 gekoppelt wird. Das Koppeln kann beispielsweise durch Schweißen herstellt werden. Es existiert ein Hohlprofil 25.

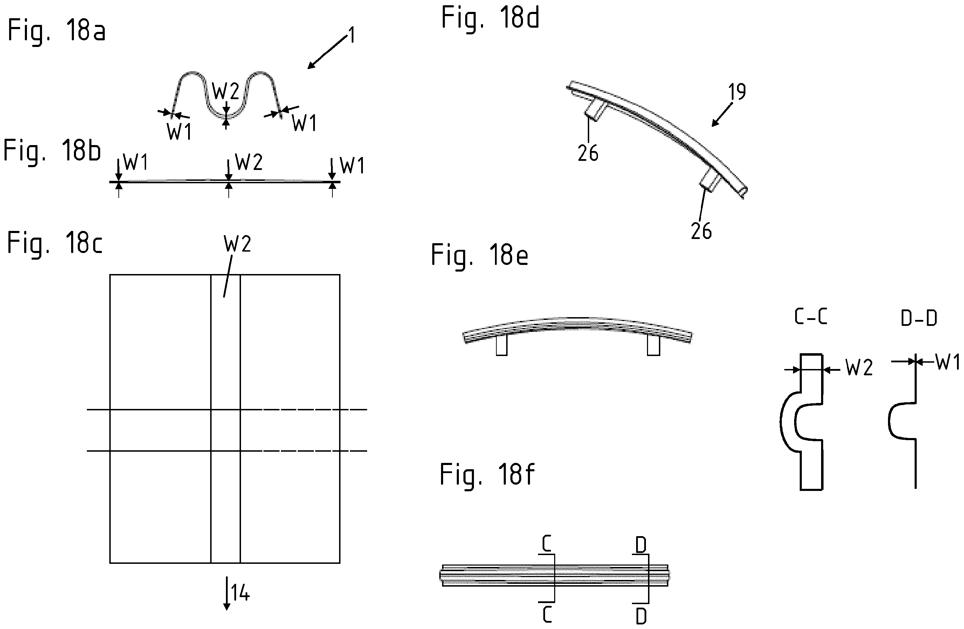

Figuren 18d bis f zeigen ein weiteres nicht beanspruchtes Kraftfahrzeugbauteil 19 als Querträger mit an dem Querträger gekoppelten Crashboxen 26. Der Querträger selbst wird dabei gemäß der Figuren 18a bis c zunächst aus einem Strangpressprofil 1 hergestellt, welches im Querschnitt einen unebenen Querschnitt aufweist, insbesondere einen wellenförmigen bzw. W-förmigen Querschnitt. Dieser wird gemäß Figur 18b abgeflacht und weist zwei voneinander verschiedene Wandstärken W1, W2 mit einem jeweiligen dazwischen liegenden Wandstärkenübergang auf. Die Wandstärke W1 nimmt dabei zu der Wandstäke W2 zu. In einem mittleren Bereich befindet sich die Wandstärke W2 die über einen mittleren Abschnitt konstant ist. Hieraus wird dann durch umformtechnisches Bearbeiten der Querträger hergestellt, welcher wiederum gemäß der Schnittlinie C-C eine größere Wandstärke W2 aufweist gegenüber der Schnitt D-D in der eine geringere Wandstärke W1 vorherrschend ist.

Im Querschnitt ist jedoch die Wandstärke jeweils über den gesamten Querschnitt homogen verteilt.

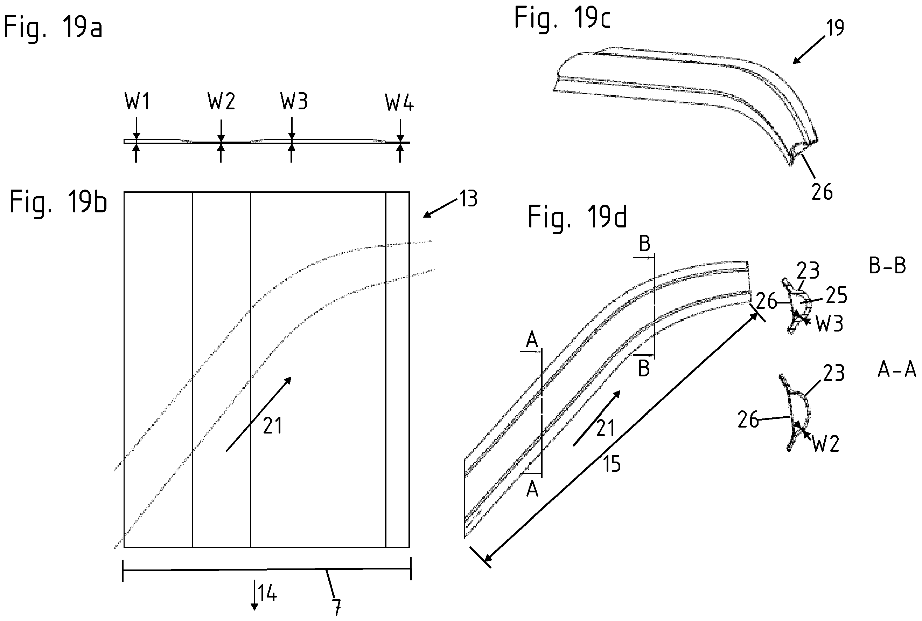

Figur 19a bis d zeigen ein Kraftfahrzeugbauteil 19 herstellt als Dachholm. Der Dachholm ist wiederum aus einem Basisbauteil 23 hergestellt, welches mittels des erfindungsgemäßen Extrusionsverfahrens hergestellt wird und folglich voneinander verschiedene Wandstärken W1, W2, W3, W4 aufweist. Die Bauteillängsrichtung 21 verläuft dabei variabel in einem Winkel zur Extrusionsrichtung 14. Folglich können voneinander verschiedene Wandstärkenbereiche in Bauteillängsrichtung 21 jeweils über den Querschnitt homogen ausgebildet werden. Insgesamt ergibt sich eine Bauteillänge 15 die länger ist als die Verarbeitungsbreite 7 der Platine 13.

### Bezugszeichen:

1 - Strangpressprofil
2 - Hohlkammer
3 - Hohlkammer
4 - Hohlkammer
5 - Flansch
6 - Extrusionsbreite
7 - Verarbeitungsbreite
8 - Bauteilbreite
9 - Nut
10 - Steg
11 - Bodenplatte
12 - Dickensprung
13 - Platine
14 - Extrusionsrichtung
15 - Bauteillänge
16 - Türaufprallträger
17 - Anbindungsbereich
18 - Folgeverbundwerkzeug
19 - Kraftfahrzeugbauteil
20 - Längsschnitt
21 - Bauteillängsrichtung
22 - Ausnehmung
23 - Basisbauteil
24 - Hohlprofilbauteil
25 - Hohlprofil
26 - Crashbox
27 - Längsrichtung
28 - Dickbereich
29 - Dünnbereich
F - Pressenkraft
W - Wandstärke
W1 - Wandstärke
W2 - Wandstärke
W3 - Wandstärke
W4 - Wandstärke
W5 - Wandstärke
W6 - Wandstärke
Z - Zugkraft
α - Winkel

## Patentansprüche

1. Verfahren zur Herstellung eines Kraftfahrzeugbauteils (19) aus einer Leichtmetalllegierung, mit folgenden Verfahrensschritten:
- Extrudieren eines Strangpressprofils (1) mit einem gewellten Querschnitt und mindestens zwei voneinander verschiedenen Wandstärken (W1, W2) und mindestens zwei geschlossenen Hohlkammern (2, 3, 4), welche benachbart sind und durch Stege (10) miteinander verbunden sind, wobei seitlich von den Hohlkammern (2, 3, 4) Flansche (5) abstehen, welches extrudierte Strangpressprofil eine Extrusionsbreite (6) aufweist,
- Zumindest teilweises Abflachen und/oder Verbreitern des Querschnitts auf eine Verarbeitungsbreite (7), wobei die Verarbeitungsbreite (7) größer als die Extrusionsbreite (6) ist, und Nuten (9) zwischen den Hohlkammern (2, 3, 4) ausgebildet sind, die das Abflachen und/oder Verbreitern begünstigen,
- Vor oder nach dem Abflachen und/oder Verbreitern Vereinzeln zu Platinen (13),
- Umformtechnisches Bearbeiten der Platinen (13) zu dem Kraftfahrzeugbauteil (19), wobei eine Bauteilbreite (8) größer ist als die Extrusionsbreite (6).

2. Verfahren nach Anspruch 1, **dadurch gekennzeichnet, dass** die mindestens zwei Hohlkammern (2, 3, 4) nach dem Abflachen und/oder Verbreitern noch erhalten sind oder dass die mindestens zwei Hohlkammern (2, 3, 4) abgeflacht werden.

3. Verfahren nach Anspruch 1 oder 2, **dadurch gekennzeichnet, dass** die mindestens zwei Hohlkammern (2, 3, 4) in Extrusionsrichtung (14) beschnitten werden, so dass in Extrusionsrichtung (14) die Hohlkammern (2, 3, 4) nur abschnittsweise ausgebildet werden.

4. Verfahren nach einem der Ansprüche 1 bis 3, **dadurch gekennzeichnet, dass** die mindestens zwei Hohlkammern (2, 3, 4) während des Verbeiterns und/oder Abflachens in Ihrer Höhe verringert und in der Breite vergrößert werden.

5. Verfahren nach einem der vorhergehenden Ansprüche, **dadurch gekennzeichnet, dass** die abgeflachte/verbreiterte Platine (13) oder das abgeflachte/verbreiterte Strangpressprofil (1) in einem Winkel zwischen 0 und 90 Grad, insbesondere zwischen 5 und 85 Grad zur Extrusionsrichtung (14) beschnitten wird, so dass eine Bauteillänge (15) des herzustellenden Kraftfahrzeugbauteils (19) größer der Verarbeitungsbreite (7) ist.

6. Verfahren nach einem der vorhergehenden Ansprüche, **dadurch gekennzeichnet, dass** eine 5000er oder 6000er oder 7000er Aluminiumlegierung extrudiert wird, wobei bevorzugt ein Strangpressprofil (1) mit einer Breite von 30mm bis 500mm und einer Wandstärke von 1 bis 10mm extrudiert wird.

7. Verfahren nach einem der vorhergehenden Ansprüche, **dadurch gekennzeichnet, dass** die Verarbeitungsbreite (7) größer 300 mm ist, insbesondere ist die Verarbeitungsbreite (7) größer 400 mm, bevorzugt größer 500 mm und insbesondere bis zu 1500 mm, ganz besonders bevorzugt bis zu 1200 mm und/oder dass die Verarbeitungsbreite (7) mindestens 10% größer, bevorzugt mindestens 20%, insbesondere mindestens 30% größer der Extrusionsbreite (6) ist.

8. Verfahren nach einem der vorhergehenden Ansprüche, **dadurch gekennzeichnet, dass** die Umformung in einem Folgeverbundwerkzeug (18) durchgeführt wird, insbesondere in einem 6-stufigen Folgeverbundwerkzeug (18)

9. Verfahren nach einem der vorhergehenden Ansprüche, **dadurch gekennzeichnet, dass** das Folgeverbundwerkzeug (18) mindestens zwei der folgenden Prozessschritte ausführt: Dehnen der Platine (13), Randbeschnitt der Platine (13), Umformen zu dem Kraftfahrzeugbauteil (19), Lochstanzen, Lochformen.

## Claims

1. Method for producing a motor vehicle component (19) from a light metal alloy, having the following method steps:
- extruding an extruded profile (1) having a corrugated cross-section and at least two mutually different wall thicknesses (W1, W2) and at least two closed hollow chambers (2, 3, 4) which are adjacent and are connected to one another by webs (10), wherein flanges (5) project laterally from the hollow chambers (2, 3, 4), which extruded profile has an extrusion width (6),
- at least partially flattening and/or widening the cross-section to a processing width (7), wherein the processing width (7) is greater than the extrusion width (6), and grooves (9) are formed between the hollow chambers (2, 3, 4), which grooves promote the flattening and/or widening,
- before or after the flattening and/or widening, separating into blanks (13),
- processing the blanks (13) by deformation into the motor vehicle component (19), wherein a component width (8) is greater than the extrusion width (6).

2. Method according to claim 1, **characterised in that** the at least two hollow chambers (2, 3, 4) are still maintained after the flattening and/or widening or **in that** the at least two hollow chambers (2, 3, 4) are flattened.

3. Method according to claim 1 or 2, **characterised in that** the at least two hollow chambers (2, 3, 4) are trimmed in the extrusion direction (14), such that in the extrusion direction (14) the hollow chambers (2, 3, 4) are only formed in portions.

4. Method according to any one of claims 1 to 3, **characterised in that** the at least two hollow chambers (2, 3, 4) are reduced in height and increased in width during the widening and/or flattening.

5. Method according to any one of the preceding claims, **characterised in that** the flattened/widened blank (13) or the flattened/widened extruded profile (1) is trimmed at an angle between 0 and 90 degrees, in particular between 5 and 85 degrees, with respect to the extrusion direction (14), such that a component length (15) of the motor vehicle component (19) to be produced is greater than the processing width (7).

6. Method according to any one of the preceding claims, **characterised in that** a 5000 series or 6000 series or 7000 series aluminium alloy is extruded, wherein preferably an extruded profile (1) with a width of 30 mm to 500 mm and a wall thickness of 1 to 10 mm is extruded.

7. Method according to any one of the preceding claims, **characterised in that** the processing width (7) is greater than 300 mm, in particular the processing width (7) is greater than 400 mm, preferably greater than 500 mm and in particular up to 1500 mm, most preferably up to 1200 mm and/or **in that** the processing width (7) is at least 10% greater, preferably at least 20%, in particular at least 30% greater than the extrusion width (6).

8. Method according to any one of the preceding claims, **characterised in that** the deformation is performed in a progressive die (18), in particular in a 6-stage progressive die (18).

9. Method according to any one of the preceding claims, **characterised in that** the progressive die (18) performs at least two of the following process steps: stretching the blank (13), edge trimming the blank (13), deforming said blank into the motor vehicle component (19), hole punching, hole forming.

## Revendications

1. Procédé de fabrication d'un composant de véhicule automobile (19) en un alliage métallique léger, avec les étapes de procédé suivantes :
- l'extrusion d'un profil extrudé (1) avec une section transversale ondulée et au moins deux épaisseurs de paroi (W1, W2) différentes l'une de l'autre et au moins deux chambres creuses (2, 3, 4) fermées qui sont contiguës et sont reliées entre elles par des nervures (10), dans lequel des brides (5) dépassent latéralement des chambres creuses (2, 3, 4), lequel profil extrudé présente une largeur d'extrusion (6),
- l'aplatissement et/ou l'élargissement au moins partiel de la section transversale à une largeur de traitement (7), dans lequel la largeur de traitement (7) est supérieure à la largeur d'extrusion (6), et des rainures (9) sont réalisées entre les chambres creuses (2, 3, 4) qui favorisent l'aplatissement et/ou l'élargissement,
- avant ou après l'aplatissement et/ou l'élargissement, la séparation en platines (13),
- l'usinage de déformation des platines (13) en le composant de véhicule automobile (19), dans lequel une largeur de composant (8) est supérieure à la largeur d'extrusion (6).

2. Procédé selon la revendication 1, **caractérisé en ce que** les au moins deux chambres creuses (2, 3, 4) sont encore conservées après l'aplatissement et/ou l'élargissement ou que les au moins deux chambres creuses (2, 3, 4) sont aplaties.

3. Procédé selon la revendication 1 ou 2, **caractérisé en ce que** les au moins deux chambres creuses (2, 3, 4) sont taillées dans le sens d'extrusion (14) de sorte que dans le sens d'extrusion (14), les chambres creuses (2, 3, 4) soient réalisées seulement par sections.

4. Procédé selon l'une quelconque des revendications 1 à 3, **caractérisé en ce que** les au moins deux chambres creuses (2, 3, 4) sont réduites dans leur hauteur et agrandies dans la largeur pendant l'élargissement et/ou l'aplatissement.

5. Procédé selon l'une quelconque des revendications précédentes, **caractérisé en ce que** la platine (13) aplatie/élargie ou le profil extrudé (1) aplati/élargi est taillé(e) selon un angle entre 0 et 90 degrés, en particulier entre 5 et 85 degrés par rapport au sens d'extrusion (14), de sorte qu'une longueur de composant (15) du composant de véhicule automobile (19) à fabriquer soit supérieure à la largeur de traitement (7).

6. Procédé selon l'une quelconque des revendications précédentes, **caractérisé en ce qu'**un alliage d'aluminium de série 5000 ou 6000 ou 7000 est extrudé, dans lequel de préférence, un profil extrudé (1) est extrudé avec une largeur de 30 mm à 500 mm et une épaisseur de paroi de 1 à 10 mm.

7. Procédé selon l'une quelconque des revendications précédentes, **caractérisé en ce que** la largeur de traitement (7) est supérieure à 300 mm, en particulier la largeur de traitement (7) est supérieure à 400 mm, de préférence supérieure à 500 mm et en particulier jusqu'à 1 500 mm, le plus préférentiellement jusqu'à 1 200 mm et/ou que la largeur de traitement (7) est supérieure d'au moins 10 %, de préférence d'au moins 20 %, en particulier d'au moins 30 % supérieure à la largeur d'extrusion (6).

8. Procédé selon l'une quelconque des revendications précédentes, **caractérisé en ce que** la déformation est réalisée dans un outil à suivre composé (18), en particulier dans un outil à suivre composé (18) à 6 niveaux.

9. Procédé selon l'une quelconque des revendications précédentes, **caractérisé en ce que** l'outil à suivre (18) réalise au moins deux des étapes de processus suivantes : extension de la platine (13), rognage des bords de la platine (13), déformation en le composant de véhicule automobile (19), poinçonnage, perforation.
